Europäisches Patentamt

European Patent Office

Office européen des brevets

(19)

(11) Veröffentlichungsnummer: **0 070 497**
**B1**

(12) **EUROPÄISCHE PATENTSCHRIFT**

(45) Veröffentlichungstag der Patentschrift:
03.10.84

(21) Anmeldenummer: 82106237.9

(22) Anmeldetag: 13.07.82

(51) Int. Cl.³: **C 07 F 7/22**, C 08 K 5/58,
C 08 L 27/06

(54) **Nichttoxische Stabilisatormischung für halogenhaltige Polymere.**

(30) Priorität: 17.07.81 US 284196

(43) Veröffentlichungstag der Anmeldung:
26.01.83 Patentblatt 83/4

(45) Bekanntmachung des Hinweises auf die Patenterteilung:
03.10.84 Patentblatt 84/40

(84) Benannte Vertragsstaaten:
BE CH DE FR IT LI NL

(56) Entgegenhaltungen:
EP - A - 0 032 106
FR - A - 2 109 945
GB - A - 1 510 974

(73) Patentinhaber: SCHERING AKTIENGESELLSCHAFT
Berlin und Bergkamen, Waldstrasse 14 Postfach 15 40,
D-4709 Bergkamen (DE)

(72) Erfinder: Buschhoff, Max, Dr. Dipl.-Chem., Auf dem
Weidkamp 28, D-4670 Lünen (DE)
Erfinder: Müller, Karl Heinz, Dr., Dipl.-Chem.,
Grevinghof 55, D-4712 Werne (DE)
Erfinder: Plum, Hans, Dr., Dipl.-Chem., Sulkshege 12,
D-4700 Hamm (DE)

# Beschreibung

Die Erfindung betrifft eine nichttoxische Stabilisatormischung für Formmassen aus halogenhaltigen Polymeren, insbesondere solche, die zu Verpackungsmaterial für Lebensmittel und medizinische oder pharmazeutische Güter verarbeitet werden. Die Stabilisatormischung besteht erfindungsgemäss aus

40 Gew.-% Didodecylzinnbisthioglykolsäureester
$$(n\text{-}C_{12}H_{25})_2Sn(SCH_2COO-R)_2$$
und

60 Gew.-% Dodecylzinntristhioglykolsäureester
$$n\text{-}C_{12}H_{25}Sn(SCH_2COO-R)_3$$
wobei R ein geradkettiger oder verzweigter Alkylrest mit 8 bis 20 C-Atomen, insbesondere der 2-Äthylhexyl-(iso-Octyl-)Rest ist.

Die Verwendung von Organozinnstabilisatoren für die Licht- und Wärmestabilisierung halogenhaltiger Polymerisate, insbesondere Polyvinylchlorid und PVC-Copolymere, ist seit langem bekannt.

In der FR-A Nr. 2109945 werden Gemische aus Dialkyl- und Monoalkylzinnstabilisatoren mit Alkylresten mit 1 bis 18 C-Atomen für die PVC-Stabilisierung vorgeschlagen, wobei die Monoorganozinnverbindung den geringeren Anteil im Gemisch ausmachen soll. Das Wirkungsoptimum wird zwischen 20 und 50% festgestellt.

Gemäss GB-A Nr. 1510974 werden PVC-Harze mit einem Gemisch aus Mono- und Di-n-octylzinnthioglykolaten stabilisiert, wobei die Monokomponente zu mindestens 70% vorhanden sein soll, mit vorteilhaften Eigenschaften in bestimmten Fällen.

EP-A Nr. 32106 beschreibt ebenfalls ein Stabilisatorgemisch aus Mono- und Dioctylzinnthioglykolaten mit 50 bis 75% Monoanteil, wobei als Thioglykolatreste $C_{10}$- bis $C_{16}$-Alkylthioglykolate vorgesehen sind.

Übliche Stabilisatoren, wie Dibutyl- oder Octylzinnthioglykolate, insbesondere im Gemisch mit den entsprechenden Monoverbindungen, zeigen bei einem Monoanteil von etwa 25 bis 30 Gew.-% hinsichtlich der Stabilisatorwirkung einen besonders günstigen synergistischen Effekt.

Es wurde gefunden, dass dagegen bei Gemischen von Bisdodecylzinnthioglykolaten mit der entsprechenden Monoverbindung eine verbesserte Stabilisatorwirkung bei einem erheblich höheren Monoanteil erreicht wird und das erfindungsgemässe Gemisch das Wirkungsoptimum aufweist (s. Tabelle). Wie aus der Tabelle ersichtlich, ist die Stabilisatorwirkung der erfindungsgemässen synergistischen Mischung bei E-PVC erheblich besser als die des Vergleichsstabilisators; auch beim S-PVC liegt sie über dem Vergleichswert.

Die ausgezeichnete wärmestabilisierende Wirkung der erfindungsgemässen Stabilisatormischungen ist um so erstaunlicher, als der Zinngehalt beispielsweise der Stabilisatormischung mit dem Isooctylthioglykolatrest mit 13,4% Zinnanteil erheblich unter dem des Vergleichsstabilisators liegt, der 17,5% Zinn enthält. Bei einer Kettenverlängerung im Esterwert nimmt die Stabilisatorwirkung der erfindungsgemässen Dodecylzinn-Stabilisatorgemische trotz des noch niedrigeren Zinngehalts (11,5% bzw. 9% beim Dodecyl- bzw. Tetradecylthioglykolat) nur unwesentlich ab. Bisher galt für alle bekannten Organozinnstabilisatoren, dass die stabilisierende Wirkung im wesentlichen vom Zinngehalt des Produktes abhängt, d.h. mit fallendem Zinngehalt nimmt auch deutlich die Wirkung ab.

Die erfindungsgemässe Stabilisatormischung hat weiterhin den Vorteil, dass sie gegenüber den gebräuchlichen Organozinnstabilisatoren noch niedrigere Toxizitätswerte aufweist und damit als nichtgiftig einzustufen ist.

So betragen die letalen Dosen ($LD_{50}$) für Ratten:

$(C_4H_9)_2SnTh_2$
Handelsprodukt mit 25%
Monoanteil = ca. 750 mg/kg

$(C_8H_{17})_2SnTh_2$
Handelsprodukt mit 20%
Monoanteil = ca. 2500 mg/kg Ratte

40% $(C_{12}H_{25})_2SnTh_2$
+ 60% $C_{12}H_{25}SnTh_3$ = 4500 mg/kg Ratte

(Th = Isooctylthioglykolate)

Eine Untersuchung der systemischen Verträglichkeit nach 12 wöchiger Verabreichung im Futter bei Ratten ergab einen sehr günstigen No-effect-level von 600 ppm. Der No-effect-level für Dibutylzinnthioglykolatverbindungen beträgt demgegenüber ca. 10 ppm und 25 ppm bei den Dioctylverbindungen.

Ein Einfluss auf das lymphatische System bei Warmblütern konnte selbst bei höchsten Dosen nicht festgestellt werden.

In Inhalationsuntersuchungen mit den erfindungsgemässen Stabilisatorgemischen an Ratten konnte kein akutes Inhalationsrisiko festgestellt werden.

Neben einer niedrigen Warmblütertoxizität ist die Migration des Stabilisators aus dem PVC von Bedeutung; sie sollte verständlicherweise möglichst gering sein.

Es wurde gefunden, dass die Migration des erfindungsgemässen Stabilisatorgemisches sehr viel niedriger liegt als bei anderen Organozinnstabilisatoren. Sie liegt unter 0,2 µg Zinn/dm² Prüffolie (gegenüber 5 µg Zinn/dm² bei Dioctylzinnthioglykolaten). In beiden Fällen betrug die Stabilisatormenge im PVC 1,5 Gew.-%.

Das erfindungsgemässe Stabilisatorgemisch ist damit in mehrfacher Hinsicht besonders geeignet für Verpackungsmaterialien auf PVC- bzw. Copolymerenbasis, die für die Verpackung von Lebensmitteln und Pharmazeutika oder auf medizinischem Gebiet, etwa für Blutkonserven, Plastikschläuche für Infusionen, Verwendung finden, wo ganz besonders niedrige Toxizitätswerte gefordert werden.

Das erfindungsgemässe Stabilisatorgemisch ist untoxisch und kann wegen der äusserst geringen Migration im Vergleich zu anderen Organozinnstabilisatoren in erheblich geringeren Mengen in das verpackte Gut gelangen. Die Einsatzmengen an Stabilisator können wegen der guten stabilisierenden Wirkung von vornherein gering gehalten werden.

Das erfindungsgemässe Stabilisatorgemisch ist ausserdem geruchsarm und weist eine geringe Flüchtigkeit auf. Bei der thermischen Verarbeitung vieler z. Zt. gebräuchlichen Organozinnstabilisatoren kann es zu erheblichen Belästigungen des Personals durch den freiwerdenden Stabilisator kommen. Die erfindungsgemässe Stabilisatormischung besitzt aufgrund ihrer hohen Siedepunkte und niedrigen Dampfdruckes diese Nachteile nicht.

Die Dodecylzinn-Stabilisatorkomponenten können nach bekannten Verfahren aus den entsprechenden Dodecylzinnchloriden oder -oxiden und Thioglykolsäureester hergestellt werden.

Die erfindungsgemässe Stabilisatormischung wird gegebenenfalls zusammen mit anderen bekannten Stabilisatoren, stabilisierenden Hilfsmitteln, Antioxidantien, UV-Stabilisatoren, Gleitmitteln, Weichmachern usw. verwendet. Sie werden in Mengen von 0,1 bis 3, insbesondere 1 bis 2 Gew.-%, bezogen auf Polymere, eingesetzt.

### Stabilisator-Wirkung

Die wärmestabilisierende Wirkung der Dodecylzinnthioglykolate wurde an einem Suspensions-PVC (Vestolit" S 7054) und einem Emulsions-PVC (Vestolit" E 7003) mit Hilfe eines Stabilimeters mit automatischem Vortrieb untersucht.

Die Testtemperatur betrug 185°C. Als Gleitmittel wurden 2% Naftolube" Fol zugesetzt.

Als Vergleichsstabilisator diente ein bisher üblicher Stabilisator, und zwar Di-n-butylzinnbisthioglykolsäureisooctylester mit 25% Gehalt an Mono-n-butylzinntristhioglykolsäureisooctylester. Der Zinngehalt dieses Stabilisators beträgt 17,5%.

*Tabelle*

| Stabilisator | Vestolit® E 7003 Dunkelfärbung nach Minuten | Vestolit® S 7054 Dunkelfärbung nach Minuten |
|---|---|---|
| 1% $(C_{12}H_{25})_2SnTh_2$* | 60 | 50 |
| 1% $C_{12}H_{25}SnTh_3$ | 60 | 50 |
| 0,8% $(C_{12}H_{25})_2SnTh_2$ + 0,2% $C_{12}H_{25}SnTh_3$ | 65 | 55 |
| 0,6% $(C_{12}H_{25})_2SnTh_2$ + 0,4% $C_{12}H_{25}SnTh_3$ | 70 | 55 |
| 0,4% $(C_{12}H_{25})_2SnTh_2$ + 0,6% $C_{12}H_{25}SnTh_3$ (erfindungsgem. Stabilisatormischung) | 80 | 65 |
| 0,2% $(C_{12}H_{25})_2SnTh_2$ + 0,8% $C_{12}H_{25}SnTh_3$ | 65 | 55 |
| 0,75% $(n-C_4H_9)_2SnTh_2$ + 0,25% $n-C_4H_9SnTh_3$ (Vergleichsstabilisator) | 65 | 55 |
| 0,4% $(C_{12}H_{25})_2SnTh_2$ + 0,6% $C_{12}H_{25}SnTh_3$[1] | 75 | 60 |
| 0,4% $(C_{12}H_{25})_2SnTh_2$ + 0,6% $C_{12}H_{25}SnTh_3$[2] | 75 | 60 |
| 0,4% $(C_{12}H_{25})_2SnTh_2$ + 0,6% $C_{12}H_{25}SnTh_3$[3] | 70 | 60 |
| 0,4% $(C_{12}H_{25})_2SnTh_2$ + 0,6% $C_{12}H_{25}SnTh_3$[4] | 70 | 60 |

* Th = Thioglykolsäureisooctylester
Th[1] = Thioglykolsäuretetradecylester
Th[2] = Thioglykolsäurehexadecylester
Th[3] = Thioglykolsäuredecylester
Th[4] = Thioglykolsäuredodecylester

### Patentansprüche

1. Nichttoxische Stabilisatormischung für Formassen aus halogenhaltigen Polymeren, bestehend aus 40 Gew.-% Didodecylzinnbisthioglykolsäureester $(n-C_{12}H_{25})_2Sn(SCH_2COO-R)_2$ und 60 Gew.-% Dodecylzinntristhioglykolsäureester $n-C_{12}H_{25}Sn-(SCH_2COO=R)_3$, wobei R einge- radkettiger oder verzweigter Alkylrest mit 8 bis 20 C-Atomen ist.

2. Stabilisatormischung gemäss Anspruch 1, dadurch gekennzeichnet, dass der Rest R der 2-Äthylhexylrest ist.

### Claims

1. A non-toxic stabiliser mixture for use in moulding materials comprising halogen-containing polymers, which mixture comprises 40% by weight of a didodecyltin-bis-thioglycolic acid ester $(n-C_{12}H_{25})_2Sn(SCH_2COO-R)_2$ and 60% by weight of a dodecyltin-tris-thioglycolic acid ester $n-C_{12}H_{25}Sn(SCH_2COO-R)_3$, wherein in each case R represents a straight-chain or branched alkyl radical having from 8 to 20 carbon atoms.

2. A stabiliser mixture according to claim 1, wherein R represents 2-ethylhexyl.

## Revendications

1. Mélange stabilisant non toxique destiné à des matières à mouler à base de polymères halogénés, mélange qui est constitué de 40% en poids d'un ester de l'acide didodécylétainbis-thioglycolique répondant à la formule $(n\text{-}C_{12}H_{25})_2Sn(SCH_2COO\text{-}R)_2$ de 60% en poids d'un ester dodécylétaintristhioglycolique répondant à la formule $n\text{-}C_{12}H_{25}Sn(SCH_2COO\text{-}R)_3$, formules dans lesquelles R représente un radical alkyle, linéaire ou ramifié, contenant de 8 à 20 atomes de carbone.

2. Mélange stabilisant selon la revendication 1, caractérisé en ce que le radical R est le radical éthyl-2 hexyle.